# EUROPÄISCHE PATENTSCHRIFT

(11) **EP 3 790 703 B1**
(45) Veröffentlichungstag und Bekanntmachung des Hinweises auf die Patenterteilung: **28.02.2024**
(21) Anmeldenummer: 19720023.1
(22) Anmeldetag: 05.04.2019
(51) Int. Cl.: B23Q 3/155, B23Q 13/00, A61C 13/00, A61C 13/12, B65D 25/10

(54) **ANORDNUNG MIT EINEM WERKZEUG UND EINER VERPACKUNG**
ASSEMBLY COMPRISING A TOOL AND PACKAGING
ENSEMBLE POURVU D'UN OUTIL ET D'UN BOÎTIER

(30) Priorität: 11.05.2018 DE 202018102658 U
(43) Veröffentlichungstag der Anmeldung: 17.03.2021
(73) Patentinhaber: Amann Girrbach AG, 6842 Koblach (AT)
(72) Erfinder: AMANN, Jürgen, 6842 Koblach (AT)
(74) Vertreter: Torggler & Hofmann Patentanwälte - Rankweil
(86) Internationale Anmeldenummer: PCT/AT2019/000009
(87) Internationale Veröffentlichungsnummer: WO 2019/213677

(56) Entgegenhaltungen:
- EP-A1- 0 522 498
- DE-A1-102005 058 881
- JP-U- H0 636 737
- KR-B1- 101 488 256
- US-A- 4 858 302

## Beschreibung

Die vorliegende Erfindung betrifft eine Anordnung mit einem Werkzeug und einer Verpackung zur Aufnahme des Werkzeugs, wobei das Werkzeug zumindest einen Bearbeitungskopf zur materialabtragenden Bearbeitung eines, insbesondere dentalen, Werkstücks mittels einer Bearbeitungsmaschine und einen Einspannabschnitt zum Befestigen des Werkzeugs in einem Spannfutter der Bearbeitungsmaschine während des materialabtragenden Bearbeitens des Werkstücks aufweist und wobei das Werkzeug mehrfach aus der Verpackung entnehmbar und wieder in der Verpackung anordenbar ist.

Die DE 10 2005 058 881 A1 offenbart ein dentalmedizinisches oder chirurgisches Instrument, bei dem zur Übertragung instrumentenspezifischer Daten automatisch lesbare Identifikationsmittel entweder direkt am Instrument oder an dessen, insbesondere steriler, Verpackung angebracht sind. Die EP 0 522 498 A1 offenbart ein Werkzeugmagazin mit einer zugeordneten Werkzeugwechseleinheit. Das Werkzeugmagazin ist in Form eines Vertikalregals ausgebildet. An diesem Vertikalregal können Trägereinheiten für Werkzeuge an verschiedenen Stellen mittels entsprechender Kuppelelemente angebracht werden.

Beim Stand der Technik ist es bekannt, Werkstücke und insbesondere dentale Werkstücke maschinell mit Bearbeitungsmaschinen materialabtragend zu bearbeiten, um so entsprechende Produkte, insbesondere Dentalprodukte, oder deren Zwischenprodukte durch materialabtragende Bearbeitung des Werkstücks herzustellen. Hierzu werden Werkzeuge, welche einen Bearbeitungskopf aufweisen, mit ihrem Einspannabschnitt in die Bearbeitungsmaschine eingespannt, um so mittels des Werkzeugs bzw. dessen Bearbeitungskopfes das Werkstück materialabtragend bearbeiten zu können. Der Einspannabschnitt wird hierzu in einem Spannfutter der Bearbeitungsmaschine befestigt. Mit dem Spannfutter wird das Werkzeug während der materialabtragenden Bearbeitung gehalten und in der Regel um eine Längsachse rotiert. Das Spannfutter mit dem Werkzeug einerseits und das Werkstück andererseits können dabei in an sich bekannter Art und Weise relativ zueinander bewegt werden. All dies ist z.B. in der EP 2 683 322 B1 gezeigt. Die Werkzeuge, dies können z.B. Fräser, Bohrer oder Schleifer sein, werden im Handel, in einer Verpackung verpackt, vertrieben und müssen dann in der Regel von Hand in ein Werkzeugzwischenlager der Bearbeitungsmaschine eingesetzt werden. Anschließend kann das jeweils benötigte Werkzeug aus dem Werkzeugzwischenlager entnommen und in das Spannfutter eingespannt werden, um so dann mit dem in dem Spannfutter eingespannten Werkzeug das Werkstück materialabtragend zu bearbeiten.

Beim Stand der Technik ist das Einsortieren neuer Werkzeuge in das Werkzeugzwischenlager von Hand einerseits aufwendig, andererseits kann es dabei auch zu Fehlern kommen. Ist ein Werkzeug an der falschen Stelle in einem Werkzeugzwischenlager eingeordnet, so kann es passieren, dass das falsche Werkzeug für den jeweils vorgesehenen Bearbeitungsgang in das Spannfutter eingespannt wird.

Aufgabe der Erfindung ist es, hier eine Verbesserung vorzuschlagen, welche zumindest das Einsetzen neuer Werkzeuge in das Werkzeugzwischenlager vereinfacht.

Hierfür ist eine Anordnung gemäß Patentanspruch 1 vorgesehen.

In anderen Worten werden bei der Erfindung die Werkzeuge also nicht mehr erst aus der Verkaufsverpackung entnommen und dann einzeln in das Werkzeugzwischenlager eingesetzt. Bei der Erfindung ist vielmehr vorgesehen, dass das jeweilige Werkzeug samt Verpackung mittels der Befestigungseinrichtung der Verpackung in das Werkzeugzwischenlager der Bearbeitungsmaschine eingesetzt und dort fixiert wird. Das Werkzeug ist dann mittels der Verpackung, oder in anderen Worten unter Zwischenschaltung der Verpackung, im Werkzeugzwischenlager der Bearbeitungsmaschine gehalten.

Ein entsprechendes Verfahren kann somit bei einer entsprechenden Anordnung vorsehen, dass die Verpackung mittels ihrer zumindest einen Befestigungseinrichtung in dem Werkzeugzwischenlager der Bearbeitungsmaschine fixiert wird. Das jeweilige Werkzeug ist dann unter Zwischenschaltung der Verpackung im Werkzeugzwischenlager der Bearbeitungsmaschine angeordnet.

Bevorzugte Merkmale der Erfindung werden beispielhaft im Zuge der nachfolgenden Figurenbeschreibung erläutert. Es zeigen:
Fig. 1 eine schematisiert dargestellte Bearbeitungsmaschine zur materialabtragenden Bearbeitung eines, insbesondere dentalen, Werkstücks mit einem Werkzeugzwischenlager, in dem mehrere Werkzeuge mittels ihrer jeweiligen Verpackung fixiert sind;
Fig. 2 das Werkzeugzwischenlager gemäß Fig. 1 vergrößert;
Fig. 3 und 4 Teile des Werkzeugzwischenlagers in voneinander getrennter Anordnung;
Fig. 5 bis 8 Darstellungen zum hier zum Einsatz kommenden Ausführungsbeispiel einer erfindungsgemäßen Anordnung und
Fig. 9 und 10 Darstellungen zur Fixierung der Verpackung samt Werkzeug im Werkzeugzwischenlager.

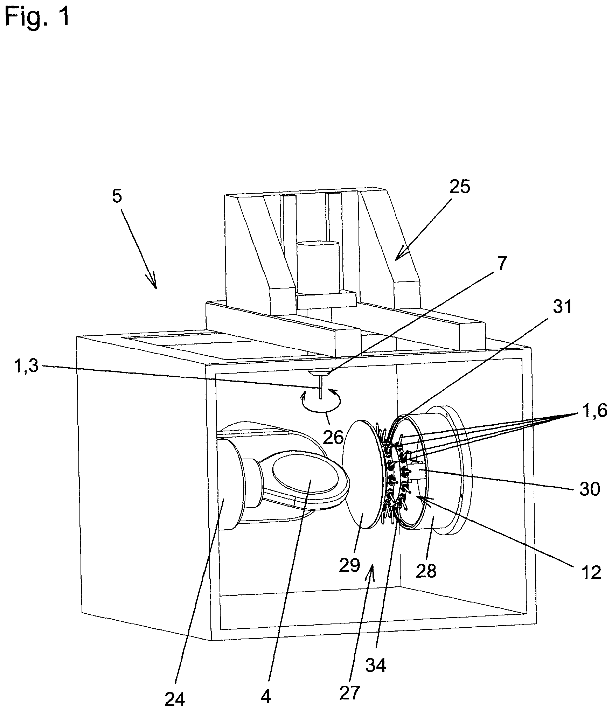

Fig. 1 zeigt in einer schematisierten Darstellung eine erfindungsgemäße Anordnung, bei der die Anordnung eine Vielzahl von Werkzeugen 1 und Verpackungen 2 aufweist, wobei die Verpackungen 2 mittels ihrer Befestigungseinrichtungen 11 in einem Werkzeugzwischenlager 12 der Bearbeitungsmaschine 5 fixiert sind. Das Werkzeugzwischenlager 12 und auch die Bearbeitungsmaschine 5 können dabei auch als Teil der Anordnung gesehen werden. Bei der Bearbeitungsmaschine 5 kann es sich z.B. um eine, abgesehen von den erfindungsgemäßen Neuerungen an sich bekannte, in der Regel computergesteuerte CAD/CAM- Maschine handeln, mit der die zu bearbeitenden Werkstücke 4 materialabtragend, also z.B. durch Bohren, Fräsen oder Schleifen bearbeitet werden können. Die computergestützte Steuerung solcher Bearbeitungsmaschinen ist an sich bekannt und muss hier nicht weiter erläutert werden. Das Werkstück 4 ist im hier gezeigten Ausführungsbeispiel in mehreren Raumrichtungen beweg- und schwenkbar an einem Trägerarm 24 in einer Bearbeitungskammer 27 der Bearbeitungsmaschine 5 angeordnet. Zur Bearbeitung des Werkstücks 4 wird, wie an sich bekannt, ein Werkzeug 1 mittels seines Einspannabschnitts 6 im Spannfutter 7 der Bearbeitungsmaschine 5 befestigt, sodass das Werkstück 4 mittels des Bearbeitungskopfes 3 dieses Werkzeugs 1 materialabtragend bearbeitet werden kann. Der Bearbeitungskopf 3 des Werkzeugs 1 kann z.B. ein Schleifkopf oder auch ein Bohrkopf oder ein Fräskopf sein. Natürlich können das Werkzeug 1 und insbesondere sein Bearbeitungskopf 3 sehr unterschiedlich ausgeformt sein. Dies ist beim Stand der Technik an sich bekannt und muss nicht weiter erläutert werden. Zur materialabtragenden Bearbeitung wird in dem hier gezeigten Beispiel das im Spannfutter 7 eingespannte Werkzeug 1 jedenfalls in einer der Richtungen 26 rotiert. Mittels des Spindelantriebs 25, welcher auch für diese Rotation sorgt, kann das Spannfutter 7 mit dem darin befestigten Werkzeug 1, vorzugsweise in allen drei Raumrichtungen und gegebenenfalls auch noch in anderen Freiheitsgraden, relativ zum Werkstück 4 bewegt werden. Durch die entsprechenden Freiheitsgrade des Trägerarms 24 einerseits und des Spannfutters 7 andererseits sind unterschiedlichste Bearbeitungswinkel am Werkstück 4 realisierbar. Auch dies ist an sich bekannt und muss nicht weiter erläutert werden. Das Spannfutter 7 ist jedenfalls das Teil der Bearbeitungsmaschine 5, in dem das jeweils gerade zur materialabtragenden Bearbeitung des Werkstücks 4 benötigte Werkzeug 1 während der materialabtragenden Bearbeitung gehalten ist. Über das Spannfutter 7 wird das Werkzeug 1 in der Regel auch entsprechend angetrieben.

Die beim momentan auszuführenden Bearbeitungsschritt nicht benötigten Werkzeuge 1 befinden sich währenddessen im Werkzeugzwischenlager 12, welches sich im hier gezeigten Ausführungsbeispiel ebenfalls innerhalb der Bearbeitungskammer 27 der Bearbeitungsmaschine 5 befindet. Erfindungsgemäß weisen, wie weiter unten noch im Detail gezeigt und erläutert, die Verpackungen 2 eines jeweiligen Werkzeugs 1 jeweils zumindest eine Befestigungseinrichtung 11 zur Fixierung der jeweiligen Verpackung 2 in dem Werkzeugzwischenlager 12 der Bearbeitungsmaschine 5 auf. Zu sehen sind in Fig. 1 jeweils der frei herausstehende Einspannabschnitt 6 des jeweiligen Werkzeugs 1 und die im Werkzeugzwischenlager 12 angeordneten Verpackungen 2, mittels derer die gerade für den Bearbeitungsschritt nicht benötigten Werkzeuge 1 im Werkzeugzwischenlager 12 zwischengelagert sind.

Im gezeigten Ausführungsbeispiel weist das Werkzeugzwischenlager 12 zusätzlich zu den Aufnahmen für die Verpackungen 2 mit den Werkzeugen 1 in der Verpackungsaufnahme 34 auch eine Lagerwandung 28 und einen Lagerdeckel 29 auf. Im hier nicht dargestellten geschlossenen Zustand liegt der Lagerdeckel 29 bevorzugt unter Zwischenschaltung einer Dichtung 31 an der Lagerwandung 28 so an, dass sich im von der Lagerwandung 28 und vom Lagerdeckel 29 gemeinsam umschlossenen Innenraum ein gegenüber der restlichen Bearbeitungskammer 27 ausreichend abgedichteter Lagerraum ausbildet, in dem die gerade nicht benötigten Werkzeuge 1 samt ihrer Verpackungen 2 gegen Feuchtigkeit, Staub und dergleichen geschützt sind. Der Lagerdeckel 29 wird bevorzugt nur dann in die in Fig. 1 gezeigte geöffnete Position gebracht, wenn ein Werkzeugwechsel 1 vorgesehen ist, wenn also ein bisher verwendetes Werkzeug 1 zurück in seine Verpackung 2 und damit zurück in das Werkzeugzwischenlager 12 einsortiert und ein neues Werkzeug 1 aus dem Werkzeugzwischenlager 12 und aus seiner Verpackung 2 entnommen und in das Spannfutter 7 mittels seines Einspannabschnittes 6 eingespannt wird. Außerdem können in der geöffneten Position natürlich auch neue Werkzeuge 1 samt ihrer Verpackung in das Werkzeugzwischenlager 12 eingebracht oder alte Werkzeuge 1 samt Ihrer Verpackung 2 aus dem Werkzeugzwischenlager 12 entfernt werden. Das Einstecken wie auch die Entnahme des Werkzeugs 1 aus der jeweiligen Verpackung 2 und damit aus dem Werkzeugzwischenlager 12 erfolgt günstigerweise vollautomatisch durch entsprechendes Bewegen des Spannfutters 7 mittels des Spindelantriebs 25. Die Verpackung 2 ist so konzipiert und dauerhaft so stabil, dass das Werkzeug 1 mehrfach aus der Verpackung 2 entnommen werden und in diese wieder eingesteckt bzw. in dieser wieder angeordnet werden kann.

Zum Öffnen und Schließen des Lagerdeckels 29 ist dieser im hier gezeigten Ausführungsbeispiel samt der Verpackungsaufnahme 34 des Werkzeugzwischenlagers 12, in der die Verpackungen 2 samt Werkzeugen 1 befestigt sind, verschiebbar an einem Lagerbolzen 30 gelagert. Durch Ein- oder Ausfahren des Lagerbolzens 30 kann so das Werkzeugzwischenlager 12 geöffnet und geschlossen werden.

Bevorzugte Varianten sehen vor, dass der Lagerdeckel 29 samt der Verpackungsaufnahmen 34 vom Lagerbolzen 30 abgenommen werden kann. Dies vereinfacht z.B. die Entnahme alter Werkzeuge 1 samt ihrer Verpackungen 2 aus dem Werkzeugzwischenlager 12 bzw. den hier ringförmig ausgebildeten Verpackungsaufnahmen 34 des Werkzeugzwischenlagers 12, um so neue Werkzeuge 1 mittels ihrer Verpackungen 2 und deren Befestigungseinrichtungen 11 in den Verpackungsaufnahmen 34 bzw. im Werkzeugzwischenlager 12 befestigen zu können. Es ist auch denkbar, so ganze Verpackungsaufnahmen 34 samt darin angeordneten Verpackungen 2 und Werkzeuge 1 auszutauschen. Es ist z.B. denkbar, entsprechende Verpackungsaufnahmen 34 mit entsprechenden, in ihren Verpackungen 2 angeordneten Werkzeugen 1 zu bestücken, welche für eine spezielle Materialart eines Werkstücks 4 benötigt werden, um so in einfacher Art und Weise einen ganzen Satz neuer Werkzeuge 1 ins Werkzeugzwischenlager 12 einbringen zu können, wenn ein anderes Material bzw. ein anderes Werkstück 4 bearbeitet werden soll.

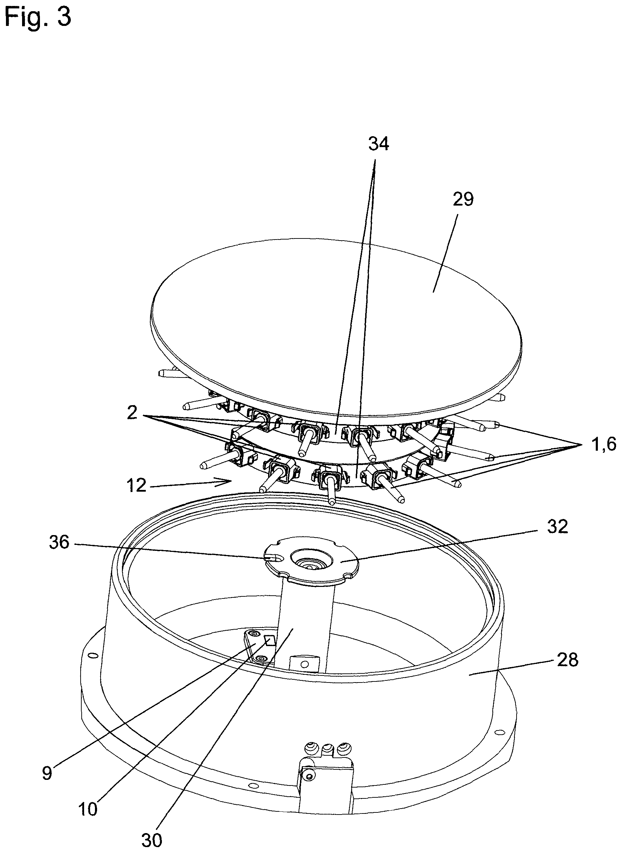

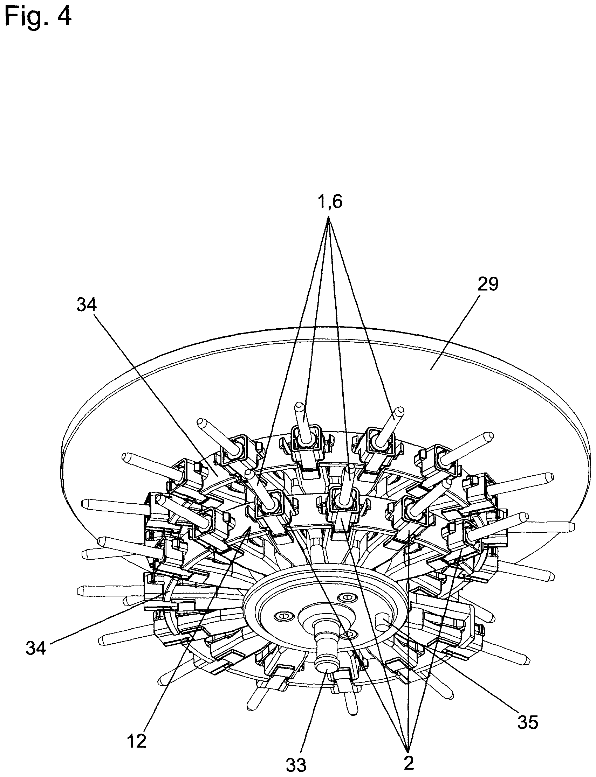

Zur lösbaren Befestigung ist, wie besonders gut in den Fig. 3 und 4 zu sehen, im hier gezeigten Ausführungsbeispiel ein eine lösbare Verbindung ausbildender Adapter 32 am Lagerbolzen 30 angeordnet. Das entsprechende Adaptergegenstück 33, welches mit dem Adapter 32 verbunden werden kann, befindet sich entsprechend an den Verpackungsaufnahmen 34 bzw. am Lagerdeckel 29, sodass ein einfaches Abnehmen und gegebenenfalls auch Austauschen des Lagerdeckels 29 samt der Verpackungsaufnahmen 34 möglich ist. Der Indexstift 35 sorgt in Zusammenwirkung mit der Indexstiftaufnahme 36 dafür, dass die Verpackungsaufnahmen 34 des Werkzeugzwischenlagers 12 samt Lagerdeckel 29 nur in einer eindeutigen Position am Lagerbolzen 30 befestigt werden können.

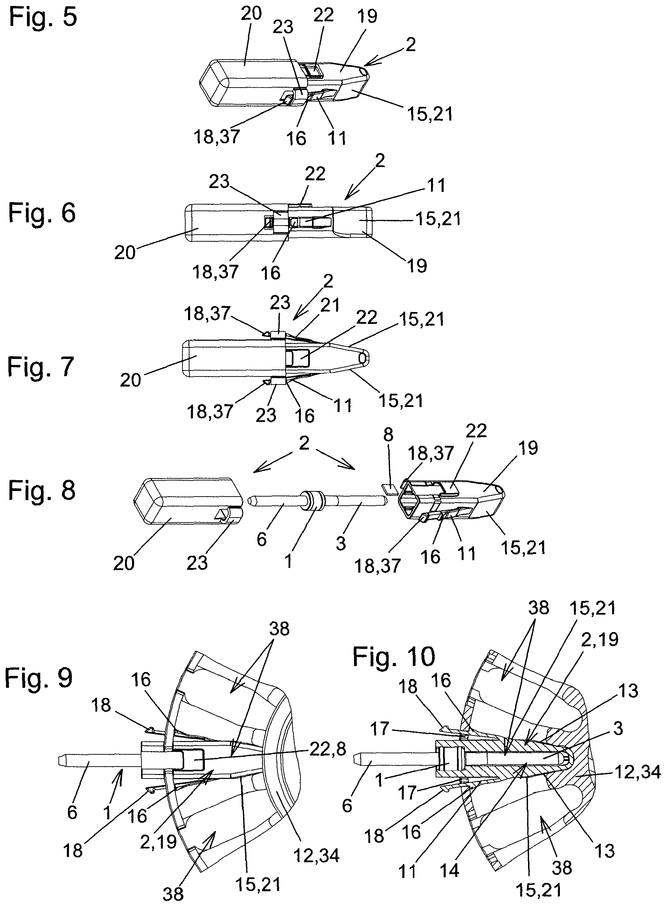

In den Fig. 5 bis 8 ist nun eine erfindungsgemäße Ausgestaltungsform einer Anordnung mit einem Werkzeug 1 und einer Verpackung 2 zur Aufnahme des Werkzeugs 1 dargestellt. Fig. 5 zeigt eine perspektivische Darstellung. Die Fig. 6 und 7 zeigen jeweils um 90° gegeneinander verdrehte Seitenansichten. Fig. 8 zeigt eine Explosionsdarstellung. In den Fig. 5 bis 7 ist die Verpackung 2 geschlossen und in der Explosionsdarstellung gemäß Fig. 8 entsprechend geöffnet dargestellt.

In Fig. 9 ist die Verpackung 2 bzw. hier deren Grundkörper 19 mitsamt dem in der Verpackung 2 angeordneten Werkzeug 1 in einer entsprechenden Aufnahme der Verpackungsaufnahme 34 und damit des Werkzeugzwischenlagers 12 angeordnet und mittels der Befestigungseinrichtung 11 fixiert. Fixiert bedeutet dabei im Sinne von lösbar fixiert, dass die Verpackung 2 mittels der Befestigungseinrichtung(en) 11 so stabil und dauerhaft in der Verpackungsaufnahme 34 oder, allgemein gesprochen, in dem Werkzeugzwischenlagers 12 festgehalten ist, dass das Werkzeug 1 einfach und ohne Probleme mehrfach aus der Verpackung 2 bzw. hier dessen Grundkörper 19 entnommen und wieder dort angeordnet werden kann, während die Verpackung 2 in der Verpackungsaufnahme 34 oder, allgemein gesprochen, in dem Werkzeugzwischenlagers 12 verbleibt. Fixiert bedeutet dabei aber bevorzugt nicht, dass die Verpackung 2 überhaupt nicht mehr aus der Verpackungsaufnahme 34 bzw. dem Werkzeugzwischenlager 12 entnommen werden kann. Der oben bereits geschilderte Austausch von Werkzeugen 1 samt ihrer Verpackungen 2 im Werkzeugzwischenlager 12 bleibt bevorzugt möglich. Fig. 10 zeigt einen Schnitt durch die Verpackungsaufnahme 34, die Verpackung 2 und das Werkstück 1.

Das Werkzeug 1 kann, wie bereits dargelegt, mehrfach aus der Verpackung 2 entnommen und wieder in dieser angeordnet werden. In anderen Worten ist die Verpackung 2 also so ausgelegt, dass das Werkzeug 1 mehrfach bzw. vielfach aus ihr entnommen und in sie wieder eingebracht werden kann. In besonders bevorzugten Varianten handelt es sich bei der Verpackung 2 gemäß der Erfindung um eine Verkaufsverpackung für den Verkauf des Werkzeugs 1. Es kann somit bei der Erfindung vorgesehen sein, dass das Werkzeug 1 mit einer Verpackung 2 im Handel angeboten werden kann, mit der es dann auch gleich im Werkzeugzwischenlager 12 der Bearbeitungsmaschine 5 befestigt werden kann. In diesen Ausgestaltungsformen ist die Verpackung 2 somit einerseits eine Verkaufsverpackung für den Vertrieb von Werkzeugen 1 im Handel und andererseits aber auch ein Befestigungsmittel zur Befestigung eines jeweils gerade nicht benötigen Werkzeugs 1 im Werkzeugzwischenlager 12 der Bearbeitungsmaschine 5.

Auch wenn dies nicht zwingend so sein muss, so sehen bevorzugte Varianten vor, dass die Verpackung 2 einen einzigen von zumindest einer Aufnahmeraumwand 13 der Verpackung 2 begrenzten Aufnahmeraum 14 aufweist, wobei in dem Aufnahmeraum 14 das Werkzeug 1 als einziges Werkzeug 1 anordenbar ist. In anderen Worten ist somit bevorzugt vorgesehen, dass in einer Verpackung 2 genau ein einziges Werkzeug 1, also nicht zwei, drei oder mehr Werkzeuge 1, angeordnet werden können. Hiervon kann in anderen Ausführungsvarianten aber natürlich auch abgewichen werden. Bevorzugt ist vorgesehen, dass das Werkzeug 1 mit seinem Bearbeitungskopf 3 im Aufnahmeraum 14 der Verpackung 2 angeordnet wird. Erfindungsgemäß ist die Verpackung 2 aus einem Grundkörper 19 und einem lösbar daran befestigbaren Deckelteil 20 und somit zweiteilig ausgebildet. Der Aufnahmeraum 14 befindet sich bevorzugt im Grundkörper 19, sodass der Bearbeitungskopf 3 des Werkzeugs 1 in den Grundkörper 19 eingesteckt werden kann. Im gezeigten, wie auch in anderen bevorzugten Ausgestaltungsformen kann vorgesehen sein, dass der Einspannabschnitt 6, welcher der Befestigung des Werkzeugs 1 in dem Spannfutter 7 dient, über den Grundkörper 19 übersteht, wenn das Werkzeug 1 mit seinem Bearbeitungskopf 3 in den Aufnahmeraum 14 eingesteckt ist. Es kann dann, wie hier auch realisiert, vorgesehen sein, dass das Deckelteil 20 beim Verkauf den Einspannabschnitt 6 des Werkzeugs 1 ummantelt, sodass das Werkzeug 1 für den Handel vollständig in der Verpackung 2 aufgenommen und von dieser ummantelt wird. Dies hat von Vorteil, dass das Werkzeug 1 während des Handels und Verkaufs besser geschützt ist. An der Außenwand 15 der Verpackung 2, bevorzugt des Grundkörpers 19 der Verpackung 2, kann, wie hier auch realisiert, die zumindest eine Befestigungseinrichtung 11 angeordnet sein. Befestigungseinrichtung 11 kann dabei alles sein, was eine entsprechende, vorzugsweise lösbare, Fixierung der Verpackung 2 im Werkzeugzwischenlager 12 erlaubt. Es kann sich bei der bzw. den Befestigungseinrichtung(en) 11 grundsätzlich z.B. um alle möglichen geeigneten form- und/oder kraft- und/oder reibschlüssigen Mittel zur Befestigung handeln. Beispiele sind Verschraubungen, Klemmverbindungen und dergleichen. Bevorzugt weist bzw. weisen die Befestigungseinrichtung(en) 11 nach außen bzw. stehen nach außen von der Außenwand 15 der Verpackung 2 bzw. bevorzugt ihres Grundkörpers 19 ab. Die Befestigungseinrichtungen 11, mit denen die jeweilige Verpackung 2 in dem Werkzeugzwischenlager 12 der Bearbeitungsmaschine 5 fixiert werden kann, sind in bevorzugten Varianten Teil einer Rastverbindung. So kann, wie hier auch dargestellt, die Befestigungseinrichtung 11 der Verpackung 2 zumindest eine Rastnase zur Ausbildung einer Rastverbindung mit dem Werkzeugzwischenlager 12 der Bearbeitungsmaschine 5 aufweisen. In Fig. 10 sind die hier in dem gezeigten Beispiel pro Verpackung 2 vorgesehenen beiden Befestigungseinrichtungen 11 mit ihren jeweiligen Rastnasen 16 in einer entsprechenden Rastnasenaufnahme 17 des Werkzeugzwischenlagers 12 bzw. hier speziell der Verpackungsaufnahme 34 des Werkzeugzwischenlagers 12 so befestigt, dass eine Rastverbindung ausgebildet ist. Die Rastnasen der Befestigungseinrichtung 11 sind bevorzugt, wie auch hier realisiert, elastisch federnd an der Verpackung 2, vorzugsweise am Grundkörper 19 und besonders bevorzugt an dessen Außenwand 15 befestigt, bevorzugt angeformt. Natürlich wäre es auch eine Alternative, dass die jeweilige Befestigungseinrichtung 11 zumindest eine Rastnasenaufnahme 17 zur Ausbildung einer Rastverbindung mit dem Werkzeugzwischenlager 12 aufweist. In diesem Falle könnten die entsprechenden Rastnasen 16 am Werkzeugzwischenlager 12 bzw. an dessen Verpackungsaufnahme 34 ausgebildet sein.

In bevorzugten Ausgestaltungsformen wie der hier dargestellten, weist die Verpackung 2 ein Betätigungselement 18 zum Lösen der Befestigungseinrichtung 11 auf. Vorzugsweise ist dieses Betätigungselement 18 so ausgebildet, dass die Befestigungseinrichtung 11 von Hand, also ohne dass hierzu Werkzeug benötigt wird, gelöst werden kann. Besonders bevorzugt ist, wie hier auch realisiert, vorgesehen, dass das Betätigungselement 18 und die Rastnase 16 bzw. gegebenenfalls andersherum auch die Rastnasenaufnahme 17 als ein federgelagerter Hebel bzw. eine Federzunge an der Verpackung 2, bevorzugt an deren Außenwand 15 und ganz besonders bevorzugt an der Außenwand 15 des Grundkörpers 19, befestigt sind. Ein entsprechend verlängerter Bereich dieses Hebels bzw. dieser Federzunge kann dann auch, wie hier realisiert, als Betätigungselement 18 zum Lösen der Befestigungseinrichtung 11 ausgebildet sein.

Die Erfindung sieht vor, dass die Befestigungseinrichtung 11 nicht nur der Fixierung der Verpackung 2 in dem Werkzeugzwischenlager 12 sondern zusätzlich auch zur Fixierung des Deckelteils 20 am Grundkörper 19 ausgebildet ist. Dies ist im hier gezeigten Ausführungsbeispiel so auch realisiert und besonders gut in den Fig. 5 bis 7 zu sehen. Wie hier gezeigt, ist es in diesem Sinne z.B. möglich, dass das Betätigungselement 18 als zusätzliche Rastnase 37 bzw. an der Befestigungseinrichtung 11 eine zusätzliche Rastnase 37 ausgebildet ist, welche der lösbaren Verbindung des Deckelteils 20 mit dem Grundkörper 19 und damit zur lösbaren Fixierung des Deckelteils 20 am Grundkörper 19 dient. Bevorzugt befindet sich hierzu ein hier als Lasche am Deckelteil 20 ausgebildetes Befestigungsmittel 23 am Deckelteil 20. in dieses Befestigungsmittel 23 kann dann die Befestigungseinrichtung 11, wie hier z.B. eben mit der zusätzlichen Rastnase 37 eingreifen, um so das Deckelteil 20, insbesondere während des Vertriebs bzw. Handels, am Grundkörper 19 zu fixieren. Natürlich kann diese Doppelfunktion der Befestigungseinrichtung 11 einerseits zur Fixierung der Verpackung 2 im Werkzeugzwischenlager 12 und andererseits zur Befestigung des Deckelteils 20 am Grundkörper 19 auch anders als hier konkret gezeigt, ausgebildet werden.

Wie bereits angedeutet, zeigen die Fig. 9 und 10 beispielhaft eine Anordnung mit einer Verpackung 2 und einem darin angeordneten Werkzeug 1 und einem Werkzeugzwischenlager 12 bzw. dessen Verpackungsaufnahme 34 der Bearbeitungsmaschine 5, wobei das Werkzeug 1 in der Verpackung, hier konkret in den Grundkörper 19 der Verpackung 2 aufgenommen ist, und die Verpackung 2, wiederum vorzugsweise der Grundkörper 19 der Verpackung 2, mittels der Befestigungseinrichtung(en) 11 in dem Werkzeugzwischenlager 12 der Bearbeitungsmaschine 5 fixiert ist. Bevorzugt sind dabei, wie aus den bisher diskutierten Figuren bereits ersichtlich, eine Vielzahl von Plätzen 38 in der Verpackungsaufnahme 34 bzw. im Werkzeugzwischenlager 12 vorgesehen, sodass eine Vielzahl von Werkzeugen 1 mit ihrer jeweiligen Verpackung 2 im Werkzeugzwischenlager 12 fixiert werden können.

Günstigerweise ist vorgesehen, dass die jeweilige Verpackung 2 nur in einer einzigen eindeutigen Ausrichtung im Werkzeugzwischenlager 12 bzw. in einem der Plätze 38 der Verpackungsaufnahme 34 befestigt werden kann. Hierzu sehen bevorzugte Varianten vor, dass die Verpackung 2, vorzugsweise der Grundkörper 19 der Verpackung 2, eine Außenkontur 21 aufweist, die nur eine einzige Ausrichtung der Verpackung 2 bei der Anordnung der Verpackung 2 in dem Werkzeugzwischenlager 12 zulässt.

Besonders bevorzugte Varianten erfindungsgemäßer Anordnungen sehen vor, dass die Verpackung einen Datenspeicher 8 aufweist. Dieser Datenspeicher 8 ist bevorzugt maschinell mehrfach auslesbar und mehrfach beschreibbar. Vorzugsweise handelt es sich um einen elektronischen Datenspeicher 8. Hierdurch wird es möglich, für das jeweils in der Verpackung 2 angeordnete Werkzeug 1 spezifische und individuelle Daten auf dem Datenspeicher 8 der Verpackung 2 zu speichern. Dies kann zur Identifizierung des Werkzeugs 1 dienen. Vor allem kann aber, allgemein gesprochen, bei einer entsprechenden Ausgestaltung auf diese Art und Weise die Historie des jeweils individuellen Werkzeugs 1 abgespeichert und bei Bedarf wieder ausgelesen werden. Der Datenspeicher 8 ist hierzu eben bevorzugt mehrfach maschinell auslesbar und auch maschinell beschreibbar. Es handelt sich also bevorzugt nicht nur um einen einmal z.B. mit einer Seriennummer oder dergleichen beschreibbaren Datenspeicher 8, bei dem die gespeicherten Daten dann nicht mehr verändert werden können, sondern um einen Datenspeicher 8, auf den jederzeit neue Daten gespeichert werden können, um diese später wieder auszulesen. Besonders bevorzugt ist der Datenspeicher 8 der Verpackung 2 ein Transponder oder ein Teil eines Transponders. Entsprechende Transponder werden beim Stand der Technik auch als Tag bezeichnet. Man könnte auch von einem Chip sprechen. Es handelt sich bei einem Transponder um die Kombination eines Transmitters und eines Responders. Besonders bevorzugt handelt es sich um einen passiven Transponder, welcher keine eigene Stromversorgung hat, sondern ausschließlich aus dem Feld einer anderen Sende- und Empfangseinheit mit Energie gespeist wird. Besonders bevorzugt ist der Transponder ein an sich bekannter RFID (Radio Frequency Identification). In dem Datenspeicher 8 der Verpackung 2 können für das jeweilige Werkzeug 1 spezifische Informationen gespeichert werden. Dies können z.B. Informationen zur Identität des Werkzeugs 1 sein. Es kann sich also um eine Typenangabe, um eine Seriennummer oder dergleichen handeln. Vor allem können auf dem Datenspeicher 8 aber bevorzugt auch Informationen über den Verschleißstatus des jeweiligen Werkzeugs 1 und/oder Informationen zu dessen bisherigen Verwendungszwecken und/oder Informationen zu dessen bisheriger Einsatzhäufigkeit gespeichert werden. So ist es z.B. auch möglich, auf dem Datenspeicher 8 zu speichern, wie lange das Werkzeug bereits in Betrieb war und wofür es eingesetzt wurde.

Der Datenspeicher 8 bzw. Transponder bzw. Chip kann auf unterschiedlichste Art und Weise an der Verpackung 2 befestigt und/oder in diese integriert sein. Es ist z.B. ein Einarbeiten, Eingießen, Ankleben und dergleichen denkbar. In der gezeigten Variante ist der Datenspeicher 8 bzw. Transponder beispielsweise in einer taschenartigen Datenspeicheraufnahme 22 der Verpackung 2 bzw. hier speziell des Grundkörpers 19 aufgenommen.

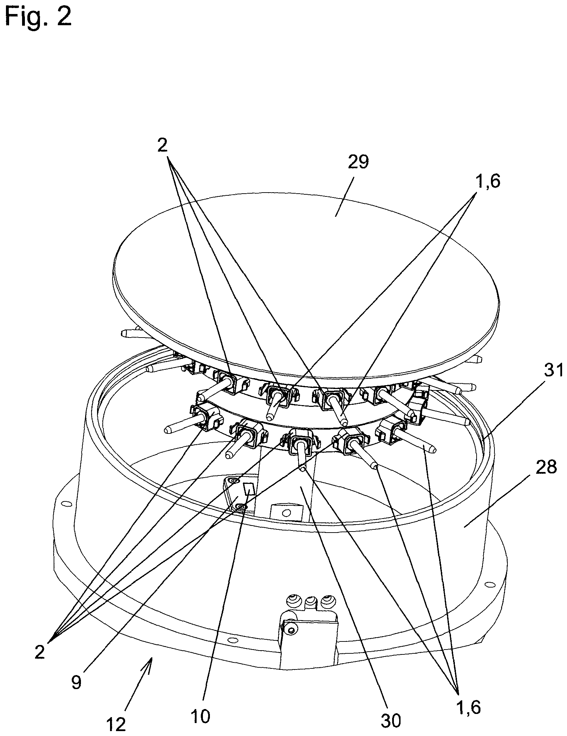

Um den Datenspeicher 8 der Verpackung 2 des jeweiligen Werkzeugs 1 auslesen und auch wieder beschreiben zu können, sehen bevorzugte Varianten vor, dass die Bearbeitungsmaschine 5, bevorzugt deren Werkzeugzwischenlager 12, eine Leseeinrichtung zum Auslesen von Daten aus dem Datenspeicher 8 der Verpackung 2 oder bevorzugt eine Lese- und Schreibeinrichtung 9 zum Auslesen von Daten aus dem Datenspeicher 8 der Verpackung 2 und zum Beschreiben des Datenspeichers 8 der Verpackung 2 mit Daten aufweist. Im Falle der Lese- und Schreibeinrichtung 9 können dann also Daten sowohl vom Datenspeicher 8 der jeweiligen Verpackung 2 gelesen als auch Daten auf dem Datenspeicher 8 der jeweiligen Verpackung 2 gespeichert werden. Bevorzugt ist dabei vorgesehen, dass die Bearbeitungsmaschine 5 zusätzlich einen maschinell mehrfach auslesbaren und maschinell mehrfach beschreibbaren, vorzugsweise elektronischen, Datenspeicher 10 aufweist. Im hier in den Darstellungen gezeigten Ausführungsbeispiel ist diese Lese- und Schreibeinrichtung 9 in das Werkzeugzwischenlager 12 integriert, wie dies besonders gut in Fig. 2 zu sehen ist. Der Datenspeicher 10 kann in diese Lese- und Schreibeinrichtung 9 ebenfalls integriert sein, was in Fig. 2 schematisiert dargestellt ist.

In dieser Konfiguration können die genannten, für das, in der jeweiligen Verpackung 2 angeordnete Werkzeug 1 spezifischen Daten sowohl auf dem Datenspeicher 8 der Verpackung 2 gespeichert und aus diesem ausgelesen werden, als auch auf dem Datenspeicher 10 der Bearbeitungsmaschine 5 gespeichert und aus diesem wieder ausgelesen werden. In diesem Zusammenhang kann somit ein Verfahren zum Betrieb einer entsprechenden Anordnung vorgesehen sein, welches dadurch gekennzeichnet ist, dass von der Lese- und Schreibeinrichtung 9 der Bearbeitungsmaschine 5 Daten aus dem Datenspeicher 8 der Verpackung 2 des Werkzeugs 1 ausgelesen und/oder in den Datenspeicher 8 der Verpackung 2 des Werkzeugs 1 geschrieben werden und/oder Daten aus dem Datenspeicher 10 der Bearbeitungsmaschine 5 ausgelesen und/oder Daten in den Datenspeicher 10 der Bearbeitungsmaschine 5 geschrieben werden. Für eine reine Leseeinrichtung gilt entsprechend nur das jeweilige Auslesen von Daten aus dem Datenspeicher 8 und/oder 10.

Es kann vorgesehen sein, dass die Daten im Zuge der Befestigung des Werkzeugs 1 in dem Spannfutter 7 der Bearbeitungsmaschine 5 aus dem Datenspeicher 8 der Verpackung 2 ausgelesen werden. Im Zuge der Befestigung kann dabei, vorzugsweise kurz, vor der Befestigung, während der Befestigung, aber auch, vorzugsweise kurz, nach der Befestigung des Werkzeugs 1 in dem Spannfutter 7 sein. Andererseits ist es dann natürlich auch möglich, dass die Daten im Zuge des Wieder- Anordnens des Werkzeugs 1 in der Verpackung 2 in den Datenspeicher 8 der Verpackung 2 und/oder in den Datenspeicher 10 der Bearbeitungsmaschine 5 geschrieben werden. Hierdurch werden diese entsprechenden Daten nach der Verwendung des jeweiligen Werkzeugs 1 entsprechend im Datenspeicher 8 der jeweiligen Verpackung 2 aktualisiert, sodass bei der nächsten Abfrage jeweils die individuelle und entsprechend aktuell gehaltene Historie des jeweiligen Werkzeugs 1 zur Verfügung steht. Durch die Speicherung der entsprechenden Informationen über das individuelle Werkzeug 1 im Datenspeicher 8 der Verpackung 2 und/oder im Datenspeicher 10 der Bearbeitungsmaschine 5 ist es auch nicht mehr nötig, für ein jeweiliges Werkzeug 1 einen fixen Platz im Werkzeugzwischenlager 12 vorzusehen, da die Position des jeweiligen Werkzeugs 1 in den genannten Datenspeichern 8 und/oder 10 hinterlegt sein und somit jederzeit abgefragt werden kann.

Abschließend wird noch darauf hingewiesen, dass mit den Werkzeugen 1 erfindungsgemäßer Anordnungen unterschiedlichste Werkstücke 4 materialabtragend bearbeitet werden können. Besonders bevorzugt handelt es sich bei den Werkstücken 4 aber um dentale Werkstücke 4, also um Werkstücke 4 aus denen Dentalprodukte wie z.B. Brücken, dentale Voll- und/oder Teilprothesen, künstliche Zähne oder dergleichen hergestellt werden.

### Legende zu den Hinweisziffern:

- 1: Werkzeug
- 2: Verpackung
- 3: Bearbeitungskopf
- 4: Werkstück
- 5: Bearbeitungsmaschine
- 6: Einspannabschnitt
- 7: Spannfutter
- 8: Datenspeicher
- 9: Lese- und Schreibeinrichtung
- 10: Datenspeicher
- 11: Befestigungseinrichtung
- 12: Werkzeugzwischenlager
- 13: Aufnahmeraumwand
- 14: Aufnahmeraum
- 15: Außenwand
- 16: Rastnase
- 17: Rastnasenaufnahme
- 18: Betätigungselement
- 19: Grundkörper
- 20: Deckelteil
- 21: Außenkontur
- 22: Datenspeicheraufnahme
- 23: Befestigungsmittel
- 24: Trägerarm
- 25: Spindelantrieb
- 26: Rotation
- 27: Bearbeitungskammer
- 28: Lagerwandung
- 29: Lagerdeckel
- 30: Lagerbolzen
- 31: Dichtung
- 32: Adapter
- 33: Adaptergegenstück
- 34: Verpackungsaufnahme
- 35: Indexstift
- 36: Indexstiftaufnahme
- 37: zusätzliche Rastnase
- 38: Platz

## Patentansprüche

1. Anordnung mit einem Werkzeug (1) und einer Verpackung (2) zur Aufnahme des Werkzeugs (1), wobei das Werkzeug (1) zumindest einen Bearbeitungskopf (3) zur materialabtragenden Bearbeitung eines, insbesondere dentalen, Werkstücks (4) mittels einer Bearbeitungsmaschine (5) und einen Einspannabschnitt (6) zum Befestigen des Werkzeugs (1) in einem Spannfutter (7) der Bearbeitungsmaschine (5) während des materialabtragenden Bearbeitens des Werkstücks (4) aufweist und wobei das Werkzeug (1) mehrfach aus der Verpackung (2) entnehmbar und wieder in der Verpackung (2) anordenbar ist, **dadurch gekennzeichnet, dass** die Verpackung (2) einen Grundkörper (19) zur Aufnahme des Werkzeugs (1), vorzugsweise des Bearbeitungskopfes (3) des Werkzeugs (1), und ein Deckelteil (20) aufweist, und dass die Verpackung (2) zumindest eine Befestigungseinrichtung (11) zur Fixierung der Verpackung (2) in einem Werkzeugzwischenlager (12) der Bearbeitungsmaschine (5) aufweist, wobei die Befestigungseinrichtung (11) am Grundkörper (19) angeordnet ist und zusätzlich zur Fixierung des Deckelteils (20) am Grundkörper (19) ausgebildet ist.

2. Anordnung nach Anspruch 1, **dadurch gekennzeichnet, dass** die Verpackung (2) eine Verkaufsverpackung für den Verkauf des Werkzeugs (1) ist.

3. Anordnung nach Anspruch 1 oder 2, **dadurch gekennzeichnet, dass** die Verpackung (2) einen einzigen, von zumindest einer Aufnahmeraumwand (13) der Verpackung (2) begrenzten Aufnahmeraum (14) aufweist, wobei in dem Aufnahmeraum (14) das Werkzeug (1) als einziges Werkzeug (1) anordenbar ist.

4. Anordnung nach einem der Ansprüche 1 bis 3, **dadurch gekennzeichnet, dass** die Befestigungseinrichtung (11), vorzugsweise nach außen weisend, an einer Außenwand (15) der Verpackung (2) angeordnet ist.

5. Anordnung nach einem der Ansprüche 1 bis 4, **dadurch gekennzeichnet, dass** die Befestigungseinrichtung (11) zumindest eine Rastnase (16) und/oder zumindest eine Rastnasenaufnahme (17) zur Ausbildung einer Rastverbindung mit dem Werkzeugzwischenlager (12) der Bearbeitungsmaschine (5) aufweist.

6. Anordnung nach einem der Ansprüche 1 bis 5, **dadurch gekennzeichnet, dass** die Verpackung (2) ein Betätigungselement (18) zum Lösen der Befestigungseinrichtung (11), vorzugsweise von Hand, aufweist.

7. Anordnung nach einem der Ansprüche 1 bis 6, **dadurch gekennzeichnet, dass** die Anordnung auch das Werkzeugzwischenlager (12) der Bearbeitungsmaschine (5), vorzugsweise die gesamte Bearbeitungsmaschine (5), umfasst und das Werkzeug (1) in der Verpackung (2), vorzugsweise in dem Grundkörper (19) der Verpackung (2), aufgenommen ist und die Verpackung (2), vorzugsweise der Grundkörper (19) der Verpackung (2), mittels der Befestigungseinrichtung (11) in dem Werkzeugzwischenlager (12) der Bearbeitungsmaschine (5) fixiert ist.

8. Anordnung nach einem der Ansprüche 1 bis 7, **dadurch gekennzeichnet, dass** die Verpackung (2), vorzugsweise der Grundkörper (19) der Verpackung (2), eine Außenkontur (21) aufweist, die nur eine einzige Ausrichtung der Verpackung (2) bei der Anordnung der Verpackung (2) in dem Werkzeugzwischenlager (12) zulässt.

## Claims

1. Arrangement comprising a tool (1) and packaging (2) for receiving the tool (1), the tool (1) comprising at least one machining head (3) for machining an in particular dental workpiece (4) in a material-removing manner by means of a machine tool (5), and a clamping portion (6) for securing the tool (1) in a chuck (7) of the machine tool (5) while the workpiece (4) is being machined in a material-removing manner, and the tool (1) being able to be removed from the packaging (2) and arranged back in the packaging (2) multiple times, **characterised in that** the packaging (2) comprises a main body (19) for receiving the tool (1), preferably the machining head (3) of the tool (1), and a cover part (20), and **in that** the packaging (2) comprises at least one securing device (11) for fixing the packaging (2) in place in a tool intermediate store (12) of the machine tool (5), the securing device (11) being arranged on the main body (19) and additionally being configured for fixing the cover part (20) in place on the main body (19).

2. Arrangement according to claim 1, **characterised in that** the packaging (2) is sales packaging for selling the tool (1).

3. Arrangement according to claim 1 or claim 2, **characterised in that** the packaging (2) comprises a single receiving space (14) which is delimited by at least one receiving space wall (13) of the packaging (2), the tool (1) being able to be arranged in the receiving space (14) as the single tool (1).

4. Arrangement according to any of claims 1 to 3, **characterised in that** the securing device (11) is arranged on an external wall (15) of the packaging (2), preferably facing outwards.

5. Arrangement according to any of claims 1 to 4, **characterised in that** the securing device (11) comprises at least one detent lug (16) and/or at least one detent lug receptacle (17) for creating a latching connection to the tool intermediate store (12) of the machine tool (5).

6. Arrangement according to any of claims 1 to 5, **characterised in that** the packaging (2) comprises an actuation element (18) for releasing the securing device (11), preferably by hand.

7. Arrangement according to any of claims 1 to 6, **characterised in that** the arrangement also comprises the tool intermediate store (12) of the machine tool (5), preferably the entire machine tool (5), and the tool (1) is received in the packaging (2), preferably in the main body (19) of the packaging (2), and the packaging (2), preferably the main body (19) of the packaging (2), is fixed in place in the tool intermediate store (12) of the machine tool (5) by means of the securing device (11).

8. Arrangement according to any of claims 1 to 7, **characterised in that** the packaging (2), preferably the main body (19) of the packaging (2), has an external contour (21) that allows for only one orientation of the packaging (2) when the packaging (2) is arranged in the tool intermediate store (12).

## Revendications

1. Ensemble comprenant un outil (1) et un boîtier (2) destiné à recevoir l'outil (1), l'outil (1) comprenant au moins une tête d'usinage (3) pour l'usinage par enlèvement de matière d'une pièce, en particulier d'une pièce dentaire, au moyen d'une machine d'usinage (5), et une section de serrage (6) destinée à fixer l'outil (1) dans un mandrin de serrage (7) de la machine d'usinage (5) pendant l'usinage par enlèvement de matière de la pièce (4), et l'outil (1) pouvant à plusieurs reprises être retiré du boîtier (2) et replacé dans le boîtier (2), **caractérisé en ce que** le boîtier (2) présente un corps de base (19) pour recevoir l'outil (1), de préférence la tête d'usinage (3) de l'outil (1), et une partie de couvercle (20), et **en ce que** le boîtier (2) présente au moins un dispositif de fixation (11) pour fixer le boîtier (2) dans un logement intermédiaire d'outil (12) de la machine d'usinage (5), le dispositif de fixation (11) étant disposé sur le corps de base (19) et étant réalisé en plus pour fixer la partie de couvercle (20) sur le corps de base (19).

2. Ensemble selon la revendication 1, **caractérisé en ce que** le boîtier (2) est un boîtier de vente pour la vente de l'outil (1).

3. Ensemble selon la revendication 1 ou 2, **caractérisé en ce que** le boîtier (2) présente un unique espace de réception (14) délimité par au moins une paroi d'espace de réception (13) du boîtier (2), l'outil (1) pouvant être disposé dans l'espace de réception (14) en tant que seul outil (1).

4. Ensemble selon l'une des revendications 1 à 3, **caractérisé en ce que** le dispositif de fixation (11) est disposé sur une paroi extérieure (15) du boîtier (2), de préférence en étant orienté vers l'extérieur.

5. Ensemble selon l'une des revendications 1 à 4, **caractérisé en ce que** le dispositif de fixation (11) comporte au moins un ergot d'encliquetage (16) et/ou au moins un logement d'ergot d'encliquetage (17) pour former une liaison par encliquetage avec le logement intermédiaire d'outil (12) de la machine d'usinage (5).

6. Ensemble selon l'une des revendications 1 à 5, **caractérisé en ce que** le boîtier (2) comporte un élément d'actionnement (18) pour libérer, de préférence manuellement, le dispositif de fixation (11).

7. Ensemble selon l'une des revendications 1 à 6, **caractérisé en ce que** l'ensemble comprend également le logement intermédiaire d'outil (12) de la machine d'usinage (5), de préférence l'ensemble de la machine d'usinage (5), et l'outil (1) est reçu dans le boîtier (2), de préférence dans le corps de base (19) du boîtier (2), et le boîtier (2), de préférence le corps de base (19) du boîtier (2), est fixé dans le logement intermédiaire d'outil (12) de la machine d'usinage (5) au moyen du dispositif de fixation (11).

8. Ensemble selon l'une des revendications 1 à 7, **caractérisé en ce que** le boîtier (2), de préférence le corps de base (19) du boîtier (2), présente un contour extérieur (21) qui ne permet qu'une seule orientation du boîtier (2) lors de la mise en place du boîtier (2) dans le logement intermédiaire d'outil (12).
